(19) Europäisches Patentamt
European Patent Office
Office européen des brevets

(11) Veröffentlichungsnummer: **0 012 249**
**B1**

# (12) EUROPÄISCHE PATENTSCHRIFT

(45) Veröffentlichungstag der Patentschrift: **27.07.83**

(51) Int. Cl.³: **C 08 G 12/34**, C 08 G 12/32, D 21 H 3/52

(21) Anmeldenummer: **79104620.4**

(22) Anmeldetag: **21.11.79**

(54) **Modifiziertes Melamin-Formaldehyd-Harz. Verfahren zu seiner Herstellung und seine Verwendung.**

(30) Priorität: **30.11.78 DE 2851760**

(43) Veröffentlichungstag der Anmeldung: **25.06.80 Patentblatt 80/13**

(45) Bekanntmachung des Hinweises auf die Patenterteilung: **27.07.83 Patentblatt 83/30**

(84) Benannte Vertragsstaaten: **AT BE CH DE FR GB IT NL SE**

(56) Entgegenhaltungen:
**EP-A-0 002 518**
**FR-A-1 130 284**
**FR-A-2 048 662**
**FR-A-2 336 446**
**GB-A-748 016**
**US-A-3 914 523**
**US-A-4 076 896**

(73) Patentinhaber: **CASSELLA Aktiengesellschaft, Hanauer Landstrasse 526, D-6000 Frankfurt am Main 61 (DE)**

(72) Erfinder: **Dörries, Peter, Hansa-Allee 80, D-6000 Frankfurt am Main 1 (DE)**
Erfinder: **Piesch, Steffen, Dr., An der Heide 32, D-6370 Oberursel (DE)**
Erfinder: **Alfons, Wolf, Einhardstrasse 34, D-6453 Seligenstadt (DE)**

(74) Vertreter: **Urbach, Hans-Georg, Dr., Hanauer Landstrasse 526, D-6000 Frankfurt am Main 61 (DE)**

EP 0 012 249 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Modifiziertes Melamin-Formaldehyd-Harz, Verfahren zu seiner Herstellung und seine Verwendung

Gegebenenfalls teilverätherte Melamin-Formaldehyd-Vorkondensate und deren wäßrige Lösungen — im täglichen Sprachgebrauch allgemein als Melaminharze bezeichnet — sind aus zahlreichen Publikationen bekannt.

Ein Hauptanwendungsgebiet derartiger wäßriger Melaminharz-Lösungen ist die Herstellung von beschichteten Holzwerkstoffen und Schichtpreßstoffen. Hierbei werden mit den Melaminharzlösungen bahnförmige Trägermaterialien, vorzugsweise Papierbahnen, imprägniert, zwischengetrocknet und anschließend unter hohem Druck und bei erhöhter Temperatur, in der Regel bei Temperaturen über 100° C, und ggf. unter Zuhilfenahme von zusätzlichen Hilfs- oder Dekorschichtmaterialien auf die Oberfläche von Holzspanplatten zu beschichteten Holzwerkstoffen oder zusammen mit phenolharzimprägnierten Papierbahnen zu Schichtpreßstoffen verarbeitet. Während des Pressens bei erhöhter Temperatur erfolgt das Auskondensieren des Melaminharzes zu harten unlöslichen, unschmelzbaren, weitgehend vernetzten Produkten, die dann eine äußerst widerstandsfähige Oberfläche auf dem beschichteten Holzwerkstoff bzw. dem Schichtpreßstoff bilden. Grundsätzlich ist bei diesem Verfahren darauf zu achten, daß bei dem Aushärtungsvorgang ein ausreichender Kondensationsgrad erreicht wird, da sonst weiche, unter Umständen sogar kleberige oder durch äußere chemische oder physikalische Einwirkungen leicht beeinflußbare oder zerstörbare Oberflächen entstehen. Die Aushärtung, die auf der Kondensation des Melamin-Formaldehyd-Vorkondensats während des Preßvorgangs zurückzuführen ist, wird erheblich beschleunigt durch sogenannte Härtungsbeschleuniger, die dem Melaminharz bereits vor dem Imprägnieren der Trägerbahnen zugefügt werden und die unerläßlich sind, um Preßdauer und Preßtemperatur in technisch durchführbare und wirtschaftlich interessante Bereiche zu bringen.

Das wichtige Kriterium der mit Melaminharzen beschichteten Werkstoffe, der Kondensationsgrad, kann durch den sogenannten Kiton-Test festgestellt werden. (Die Ausführung des Kiton-Tests ist zum Beispiel in den Beispielen 1 und 5 der US-Patentschrift 39 14 523 beschrieben.)

Die Notwendigkeit, vor dem Tränken der Trägerbahnen mit dem Melaminharz dieses mit einem Härter zu versetzen, um in annehmbarer Preßzeit eine ausreichende Aushärtung des Harzes zu gewährleisten, führt jedoch zu einer drastischen Herabsetzung der Lagerfähigkeit des Harzes. Dies bedeutet, daß für den restlosen Verbrauch des Harzes nur eine begrenzte Zeit, die sogenannte Topfzeit, zur Verfügung steht. Während dieser Zeit muß der gesamte Imprägniervorgang abgeschlossen sein und jede Störung dieses Vorgangs, die zu einer Unterbrechung der Imprägnierung und damit zu einer Zeitverzögerung führt, kann zur Folge haben, daß das Harz bereits in der Tränkanlage geliert oder fest wird. Sofern eine Gelierung des Melaminharzes eintritt, ist der gesamte Harzrestbestand unbrauchbar und muß verworfen werden. Festwerden eines Tränkharzes in der Tränkanlage bedeutet darüber hinaus einen erheblichen Aufwand an Reinigungs- und Instandsetzungsarbeiten an der Tränkanlage.

Die Risiken, die beim Gebrauch eines Harzes mit niedriger Topfzeit gegeben sind, haben zur Entwicklung sogenannter latenter Härter geführt, deren Beschleunigungswirkung mit steigender Temperatur sehr stark zunimmt. In der Tat ist es möglich, die Topfzeit durch den Einsatz latenter Härter deutlich zu verlängern. Eine wirkliche Sicherheit gegen länger andauernde technische Störungen der Anlage und damit verbundene Folgekosten durch Gelieren oder Festwerden der Tränkharze ist jedoch durch den Einsatz von latenten Härtern bisher nicht möglich. Es ist auch bereits bekannt, im Falle einer Störung des Tränkvorganges das mit Härter versetzte Harz mit Alkalien, vornehmlich Soda, zu versetzen, die den Härter unwirksam machen oder zumindest seine Wirksamkeit drastisch herabsetzen. Ein solcher Alkali-Zusatz hat jedoch zur Folge, daß das Tränkharz in der vorgeschriebenen Preßzeit und bei der üblichen Preßtemperatur nicht mehr voll aushärtet und weiche, angreifbare oder gar klebrige Oberflächen erhalten werden. Wird ein durch Alkali-Zusatz stabilisiertes, vorher mit Härter versetztes Melaminharz erneut mit Härter versetzt um die Aushärtung des Harzes wieder zu beschleunigen, so erhält man in der Regel aufgrund der hohen Alkali- und Härter-Konzentrationen und des daraus resultierenden hohen Salzgehaltes der fertigen Überzüge eine verminderte Wasser-Resistenz des Endprodukts.

Besonders kritisch ist die Verarbeitung von Melaminharzen, die mit bestimmten niederen, gesättigten Fettsäureamidderivaten modifiziert sind, um hochelastische Überzüge zu ergeben. Derartige Modifizierungsmittel neigen häufig dazu die Topfzeit der unmodifizierten Harze der sogenannten Grundharze deutlich herabzusetzen.

Es bestand daher ein dringendes Bedürfnis Melamin-Harze bereitzustellen, die eine verlängerte Topfzeit aufweisen und damit bei der Verarbeitung eine Sicherheit-Reserve besitzen. Insbesondere bei den qualitativ besonders hochwertigen, fettsäureamidmodifizierten Harzen ist diese Forderung von gravierender Bedeutung.

Die vorliegende Erfindung betrifft nun Melamin-Harze, die gegenüber den nächstvergleichbaren bekannten Harzen eine wesentlich verlängerte Topfzeit und damit eine verbesserte Verarbeitungsmöglichkeit bieten, und die unter normalen Preßbedingungen voll ausgehärtete Oberflächen auf den hergestellten beschichteten Holzwerkstoffen bzw. Schichtpreßstoffen ergeben. Die erfindungsgemäßen Melaminharze haben ein Melamin-Formaldehyd-Molverhältnis von 1 : 1,4 bis 1 : 2,6, vorzugsweise 1 : 1,5 – 1 : 2,3.

Sie können bekannte Modifizierungsmittel in den üblichen Mengen erhalten. Die erfindungsgemäßen Melamin-Formaldehyd/Harze sind dadurch gekennzeichnet, daß sie 0,1 bis 1,0, vorzugsweise 0,2 bis 1,0, Gewichtsprozent bezogen auf Festkörper, besonders bevorzugt 0,25 bis 0,5 Gewichtsprozent, eines Amins der Formel I

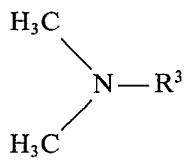

(I)

worin $R^3$ 2-Hydroxyäthyl oder 2,3-Dihydroxypropyl bedeutet, wobei das Amin ganz oder teilweise in Form seiner Reaktionsprodukte mit dem Melamin-Formaldehyd-Kondensationsprodukt vorliegen kann, und 0,5 bis 40 Gew.-%, bezogen auf Festkörper, Methylenbisformamid der Formel II

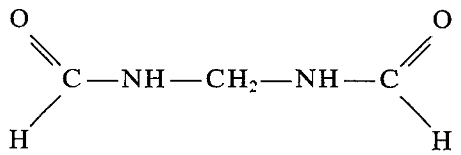

(II)

und/oder Bis-(N-acylaminomethyl)-äther der Formel III

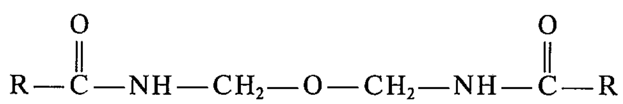

(III)

worin R Wasserstoff oder Methyl bedeutet und/oder ein Kondensationsprodukt aus ε-Caprolactam, Formaldehyd und Formamid im Molverhältnis 1 : a : b, wobei a eine Zahl von 1 bis 20, vorzugsweise 1 bis 2, und b eine Zahl von 1 bis 19, vorzugsweise 1, bedeutet und a und b so gewählt werden, daß der

Quotient $\frac{a}{b+1}$ = 0,5 bis 1 ist, enthalten.

Unter den Kondensationsprodukten aus ε-Caprolactam, Formaldehyd und Formamid sind besonders das N-(Formylaminomethyl)-ε-caprolactam und das N-(N'-Formyl-N'-hydroxymethyl-aminomethyl)-ε-caprolactam zu erwähnen.

Besonders vorteilhaft in bezug auf Topfzeit, Aushärtungsverhalten und anwendungstechnische Eigenschaften der herstellbaren Überzüge sind solche erfindungsgemäßen Harze, die als Modifizierungsmittel 2,5 bis 25 Gew.-% eines Amids der Formel II oder III oder eines der obengenannten Kondensationsprodukte des ε-Caprolactams und 0,1 bis 1,0, vorzugsweise 0,2 bis 1,0, Gewichtsprozent eines Amins der Formel I enthalten. Auch in dieser Gruppe bevorzugter erfindungsgemäßer Harze sind diejenigen besonders vorteilhaft, die ein oder eine Kombination mehrerer bevorzugter Merkmale aufweisen.

Die erfindungsgemäßen Harze werden hergestellt, indem in an sich bekannter Weise Melamin, Formaldehyd und gegebenenfalls an sich bekannte Modifizierungsmittel in Gegenwart üblicher anorganischer Basen im pH-Bereich von 8,2 bis 10,4 kondensiert werden, bis eine Wasserverdünnbarkeit von etwa 1 : 3,0 bis 1 : 0,8 erreicht ist. Vor, während oder nach der Kondensation wird dem Harzansatz 0,1 bis 1,0, vorzugsweise 0,2 bis 1,0, Gewichtsprozent, bezogen auf Feststoffe eines Amins der Formel I, worin der Rest $R^3$ die oben angegebenen Definitionen hat, zugesetzt. Eine Reihe an sich bekannter Modifizierungsmittel kann dem Harzansatz auch nach der Kondensation in der gewünschten Menge noch zugefügt werden. Der pH-Wert von 8,2 bis 10,4, der zur Durchführung der Kondensation erforderlich ist, wird üblicherweise durch Zusatz bekannter anorganischer Basen wie Alkalihydroxyde, beispielsweise Natrium oder Kaliumhydroxyd, oder Alkalicarbonate, beispielsweise Soda oder Pottasche, eingestellt.

Sofern der Zusatz des Amins der Formel I nach der Kondensation erfolgt, die in an sich bekannter Weise unter Verwendung von anorganischen Basen durchgeführt wurde, so ergibt sich im fertigen Harz ein Gesamtbasengehalt von anorganischer Base und Amin der Formel I, der geringfügig über den üblicherweise vorhandenen Basenmengen liegt. In der Regel wirkt sich dieser geringe Basenüberschuß in keiner Weise nachteilig aus. Will man absolut sichergehen, daß keinerlei Abfall des Aushärtungsgrades eintritt, so kann man den Härter etwas höher dosieren oder die Preßbedingungen geringfügig verschärfen. Es ist auch möglich, jedoch nicht erforderlich, den geringen Basenüberschuß im fertigen Harz dadurch zu kompensieren, daß man einen dem bei der Kondensation anwesenden Alkali äquivalenten Teil des Amins der Formel I in Form seines Salzes mit

einer starken anorganischen Säure, wie beispielsweise in Form des Sulfats oder des Hydrochlorids, in das Harz nach der Kondensation einbringt und nur den darüber hinaus gehenden Teil des Amins der Formel I in Form der freien Base zusetzt. Am einfachsten gestaltet sich die Herstellung der erfindungsgemäßen Produkte, wenn man das Amin der Formel I bereits vor Beginn der Kondensation dem Reaktionsansatz zufügt. In diesem Fall kann die Einstellung des zur Kondensation erforderlichen pH-Werts allein durch dieses Amin erreicht werden und der Zusatz an sich bekannter anorganischer Basen kann unterbleiben. Der Aminzusatz vor Beginn der Kondensation ist bei der Herstellung der erfindungsgemäßen Harze daher bevorzugt.

Nach dem oben Gesagten werden die erfindungsgemäßen Harze hergestellt, indem man Melamin mit Formaldehyd im Molverhältnis von 1 : 1,4 bis 1 : 2,6 in Gegenwart katalytischer Mengen üblicher basischer Substanzen als Kondensationsmittel und ggf. unter Zusatz von üblichen Modifizierungsmitteln kondensiert, wobei man der Reaktionsmischung vor, während oder nach der Kondensation 0,1 bis 1,0, vorzugsweise 0,2 bis 1,0, Gewichtsprozent, bezogen auf den Festkörper des Kondensationsprodukts eines Amins der Formel I

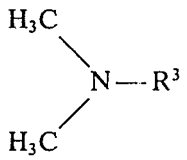

(I)

worin $R^3$ 2-Hydroxyäthyl oder 2,3-Dihydroxypropyl bedeutet, wobei das Amin ganz oder teilweise in Form seiner Reaktionsprodukte mit dem Melamin-Formaldehyd-Kondensationsprodukt vorliegen kann, und 0,5 bis 40 Gew.-%, bezogen auf Festkörper, Methylenbisformamid der Formel II

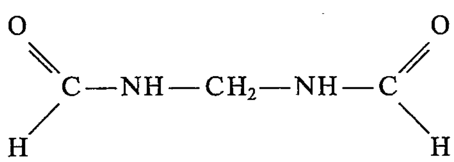

(II)

und/oder Bis-(N-acylaminomethyl)-äther der Formel III

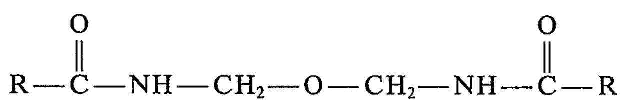

(III)

worin R Wasserstoff oder Methyl bedeutet und/oder ein Kondensationsprodukt aus ε-Caprolactam, Formaldehyd und Formamid im Molverhältnis 1 : a : b, wobei a eine Zahl von 1 bis 20, vorzugsweise 1 bis 2, und b eine Zahl von 1 bis 19, vorzugsweise 1, bedeutet und a und b so gewählt werden, daß der Quotient $\frac{a}{b+1} = 0{,}5$ bis 1 ist, zusetzt.

Besonders bevorzugte Harze werden hergestellt, indem man die Modifizierungsmittel der Formel II und/oder der Formel III, und/oder die Kondensationsprodukte aus ε-Caprolactam, Formaldehyd und Formamid in einer Menge von 2,5 bis 25 Gew.-% bezogen auf Festkörper des Harzes zusetzt und vor, während oder nach der Kondensation 0,1 bis 1,0 Gew.-% bezogen auf den Festkörper des Harzes eines Amins der Formel I zufügt.

Besonders wertvolle erfindungsgemäße Harze werden erhalten, wenn man das Amin der Formel I vor der Kondensation zusetzt und den Zusatz der katalytischen Menge der sonst als Kondensationsmittel üblichen basischen Substanz unterläßt.

Bei der Harzherstellung wird wie üblich die Kondensation nur soweit durchgeführt, daß die Harze noch löslich und schmelzbar bleiben. Dabei wird in der Regel bis zu einer begrenzten Wasserverdünnbarkeit — bei der Herstellung der erfindungsgemäßen Harze in der Regel bis zu einer Wasserverdünnbarkeit von etwa 1 : 3,0 bis 1 : 0,8 — kondensiert. In manchen Fällen, z. B. bei Zusatz von größeren Mengen von Salzen der Amidosulfosäure, können die erhaltenen Harze auch unbegrenzt wasserlöslich sein. Zur Bestimmung der Wasserverdünnbarkeit wird eine Probe des Harzes mit Wasser bei 20°C titriert. Z. B. besagt die Angabe »Wasserverdünnbarkeit 1 : X«, daß 1 ml Harz bei 20°C X ml Wasser aufnehmen kann, ohne daß eine Trübung auftritt. Die Durchführung der Kondensation bei der Aminoplastherstellung ist detailliert beschrieben z. B. in Kirk-Othmer, Encyclopedia of Chemical Technology, 1. Auflage, Vol. 1 (1947), 756–759; Houben-Weyl »Methoden der organischen Chemie«, Bd. XIV/2, »Makromolekulare Stoffe«, Teil 2 (1963), Georg Thieme Verlag, Stuttgart, insbesondere Seiten 346 bis 357 (Harnstoffkondensate), S. 357–371 (Melaminkondensate), S. 382–388 (Kondensationsprodukte von Dicyandiamid und Guanidin); John F. Blais »Amino Resins«, Reinold Publishing Corp., New York (1959), Seiten 26–53; C. P. Vale »Aminoplastics« Cleaver Hume Press Ltd.,

London (1950), Seiten 12–87; Ullmanns Encyklopädie der technischen Chemie, 4. Auflage, Band 7 (1973), Seiten 403 bis 414.

Bei der Herstellung der Harze können auch noch andere bekannte Modifizierungsmittel, beispielsweise wasserlösliche Mono- oder Dialkohole, wie Methanol, Äthanol, Äthylenglykol, Äthylendiglykol, ferner Pentaerythrit, Carbamate, wie Methylcarbamat, Methoxyäthylcarbamat, Salze der Malein- oder Fumaramidsäure, Zucker, Sorbit, Amidosulfosäure, aromatische Sulfonsäureamide oder Salze zugefügt werden.

Nach beendeter Kondensation können den erfindungsgemäßen Aminoplasten auch bekannte Härter bzw. Härtungsbeschleuniger, z. B. Salze schwacher bis starker organischer Säuren, beispielsweise Diäthanolaminoacetat, Äthanolaminhydrochlorid, Äthylendiaminacetat, Ammoniumrhodamid, Ammoniumlactat, Äthylendiaminphosphat oder Morpholin-p-toluolsulfonat zugefügt werden, um die Härtung zu beschleunigen.

Aufgrund der hervorragenden Lagerstabilität der erfindungsgemäßen Harze in Gegenwart bekannter Härter ist es auch möglich, den Harzen schon vor dem Versand einen Härter in der zur Aushärtung ausreichenden Menge zuzusetzen.

Die Verarbeitung der erfindungsgemäßen Harze erfolgt in an sich bekannter Weise nach dem Stand der Technik durch Tränken von Trägerbahnen, vorzugsweise Papier- bzw. Gewebebahnen mit einem erfindungsgemäßen Aminoplast.

Die getränkte und getrocknete Papier- bzw. Gewebebahn wird auf eine vorbereitete Holz-Werkstoffplatte unter Drucken von ca. 10 bis 100 bar und Temperaturen von ca. 120 bis 180°C aufgepreßt, wobei für die Pressung vorteilhafterweise Mehretagenpressen verwendet werden. Analog können beim Einsatz von mit Phenolharz imprägnierten Trägerbahnen anstelle der Holzwerkstoffplatten Schichtstoffe hergestellt werden, wobei Preßdrucke von ca. 50 bis 150 bar und Temperaturen von ca. 120 bis 180°C zur Anwendung kommen. Detaillierte Angaben zur Herstellung beschichteter Holzwerkstoffplatten und von Schichtstoffen finden sich in J. F. Blais, loc. cit, Seiten 122–138; C. P. Vale, loc. cit, Seiten 209–214, und Ullmann, loc. cit, Seiten 417–418.

Die erfindungsgemäßen Harze haben gegenüber den nächstvergleichbaren bekannten Harzen eine erheblich verlängerte Topfzeit, weisen dabei aber trotzdem ein ausgezeichnetes Härtungsverhalten auf, d. h., daß sie bei normalem Verpressen auch nach dem Kurztaktverfahren unter Zusatz der üblichen Härtermengen sehr gut durchgehärtete Oberflächenschichten ergeben. Die so erhaltenen beschichteten Holzwerkstoffe und Schichtpreßstoffe weisen sehr gute bis ausgezeichnete Härte und ausgezeichnete Beständigkeit gegen organische Lösungsmittel, Wasser, verdünnte wäßrige Säuren und Basen sowie gegen Wasserdampf auf und zeichnen sich durch hohe Elastizität und hohen, gleichmäßigen Glanz aus.

Die Herstellung des als Modifizierungsmittel einsetzbaren Kondensationsproduktes aus ε-Caprolactam, Formaldehyd und Formamid kann beispielsweise so erfolgen, daß Formamid und Paraformaldehyd in Gegenwart eines Alkalihydroxids 4 bis 15 Stunden lang unter Rühren auf Temperaturen von ca. 80°C erhitzt wird. Anschließend wird das Reaktionsgemisch sauer gestellt, beispielsweise durch Zugabe von Kaliumhydrogensulfat, und das ε-Caprolactam zugefügt und der Ansatz auf 100 bis 135°C erhitzt und, gegebenenfalls unter einem Vakuum von ca. 100 bis 300 mbar, das bei der Kondensation entstandene Wasser abdestilliert, wobei die Anwendung eines Schleppmittels, wie z. B. Toluol, zweckmäßig ist. Das ε-Caprolactam kann auch bereits zu Beginn der Reaktion zugefügt werden. Die nach der Abdestillation des Schleppmittels erhaltenen Kondensationsprodukte sind zumeist klare viskose Flüssigkeiten, die in jedem Verhältnis mit Wasser mischbar sind und auch in unverdünntem Zustand nur wenig zur Kristallisation neigen.

Bei einem Molverhältnis ε-Caprolactam : Formaldehyd : Formamid = 1 : 1 : 1 entsteht bei der Herstellung des Modifizierungsmittels ein Produkt, das in reiner kristalliner Form als N-(Formylaminomethyl)-ε-caprolactam der Formel

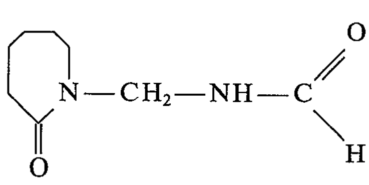

(IV)

isoliert werden kann. Bei einem Molverhältnis ε-Caprolactam : Formaldehyd : Formamid = 1 : 2 : 1 kann das Methylolierungsprodukt des N-(Formylaminomethyl)-ε-caprolactams, nämlich das N-(N′-Formyl-N′-hydroxymethyl-aminomethyl)-ε-caprolactam, der Formel

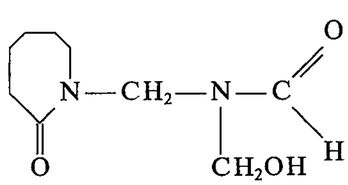

(V)

in reiner Form isoliert werden.

Es ist jedoch nicht erforderlich, die Verbindungen der Formel IV oder V für ihre Verwendung als Modifizierungsmittel zu reinigen oder in reiner Form zu isolieren, sondern es genügt, wenn die bei der Herstellung anfallenden öligen Rohprodukte zur Herstellung des Aminoplastharzes benutzt werden.

Das als Modifizierungsmittel zu verwendende Kondensationsprodukt aus ε-Caprolactam, Formaldehyd und Formamid kann auch in Form wäßriger Lösungen zugefügt werden.

In den folgenden Ausführungsbeispielen, die die Herstellung der erfindungsgemäßen Harze und ihre Verwendung veranschaulichen, sind alle %-Angaben Gewichtsprozente, bezogen auf Festkörper des Harzansatzes.

## Beispiel 1

800 g wäßriges Formaldehyd 39%ig, 75 g Methanol, 6,5 g Dimethylaminoäthanol, 770 g Melamin und 20 g Caprolactam werden bei 90° C gerührt, bis eine Wasserverdünnbarkeit von 1 : 2,0 erreicht ist. Es wird auf 20° C abgekühlt und 110 g Methylenbisformamid zugesetzt. Man erhält 1800 g Melaminharz, das, mit 0,9% Morpholin-p-toluolsulfonat als Härter versetzt, ca. 2 Wochen haltbar ist.

1.1. In der mit Härter versetzten Tränkflotte wurde sofort nach der Herstellung ein 80 $g/m^2$ schweres weißes Dekorpapier auf ein Endgewicht von ca. 200 $g/m^2$ imprägniert und auf einen Restfeuchtegehalt von 5,5 bis 7 Gew.-% (5 Min./160° C) getrocknet.
(Die Angabe 5 Min./160° C in diesem und den folgenden Beispielen besagt, daß zur Bestimmung des Restfeuchtegehalts eine Probe 5 Minuten lang bei 160° C gelagert und aus dem dabei erlittenen Gewichtsverlust der Restfeuchtegehalt berechnet wurde.)

1.1.1. Ein Teil der Papiere wurde anschließend auf einer Kurztaktpresse mit einem Druck von 18 bis 22 bar bei einer Temperatur von 160° C auf Holzspanplatten aufgepreßt. Die Standzeit der Presse betrug 60 Sekunden. Die Oberflächen der Beschichtungen zeigten gleichmäßigen Glanz und nach einer Temperung von 20 Stunden bei 140° C keine Risse. Die Aushärtung der Oberfläche war ebenfalls gut; der Kitontest ergab die Note 2 – 3.

1.1.2. Ein Teil der imprägnierten Papiere wurde auf einer Kurztaktpresse mit einem Druck von 18 bis 22 bar bei einer Temperatur von 180° C und einer Standzeit von 3 Minuten auf Holzspanplatten aufgepreßt (Überhärtungspressung). Die Oberflächen der Beschichtungen zeigten bei gleichmäßigen Glanz und sehr hoher Aushärtung keine Risse. Der Kitontest ergab eine Note von 1 – 2.

1.1.3. Ein Teil der imprägnierten Papiere wurde auf einer Mehretagenpresse mit einem Druck von 18 bis 22 bar bei einer Temperatur von 140° C auf Holzspanplatten aufgepreßt. Die Standzeit der Presse betrug 10 Minuten. Danach wurde auf eine Temperatur von 70 bis 80° C zurückgekühlt und entformt. Die Oberflächen der beschichteten Holzspanplatten zeigten bei sehr guter Aushärtung (Kitontest-Note ~2) gleichmäßigen Hochglanz und nach einer Temperung von 20 Stunden bei 80° C keine Risse.

1.2. Der Harzlösung des Beispiels 1 wurde 1,2 Gew.-% des gleichen Härters, bezogen auf Festharz, zugesetzt. In der mit Härter versetzten Tränkflotte wurde ein 80 $g/m^2$ schweres Papier wie bei Beispiel 1.1. getränkt und getrocknet. Die imprägnierten Papiere wurden gemäß Beispiel 1.1.2. verpreßt. Die Oberflächen der Papiere zeigten bei gleichmäßigen Glanz und sehr hoher Aushärtung (Kitontest-Note: 1 – 2) keine Risse.

Das Imprägnieren und Verpressen gemäß Beispiel 1.1. und 1.1.1 bis 1.1.3 wurde mit dem gleichen, 0,8% Härter enthaltenden Harz nach einer Lagerung von 10 Tagen wiederholt. Dabei wurden praktisch die gleichen Ergebnisse erhalten wie bei der sofortigen Verarbeitung des Harzes.

## Vergleichsbeispiel 1a

800 g wäßriges Formaldehyd 39%ig, 75 g Methanol, 4 g 2 N-Natronlauge, 770 g Melamin und 20 g Caprolactam werden bei 90° C gerührt, bis eine Wasserverdünnbarkeit von 1 : 2,0 erreicht ist. Es wird auf 20° C abgekühlt und 110 g Methylenbisformamid zugesetzt. Man erhält 1800 g Melaminharz, das mit 0,9% Morpholin-p-toluolsulfonat als Härter versetzt und bereits nach 18 Std. Ausflockungen zeigt und nach 3 Tagen völlig fest ist.

Zu einem Harz gleich geringer Haltbarkeit kommt man, wenn das Modifizierungsmittel Methylenbisformamid durch die gleiche Menge eines Mischkondensationsprodukts am ε-Caprolactam, Formamid und Formaldehyd im Molverhältnis 1 : 9 : 5 ersetzt.

Auch der Ersatz der als Kondensationsmittel eingesetzten Natronlauge durch 2 g Pottasche bringt keine wesentliche Verbesserung der Haltbarkeit. In diesem Falle zeigen sich Flocken nach 20 Std., und das Festwerden erfolgt nach 3 Tagen.

## Beispiel 2

800 g wäßriges Formaldehyd 39%ig, 75 g Methanol, 6,5 g Dimethylaminoäthanol, 770 g Melamin und 20 g Caprolactam werden bei 90°C gerührt, bis eine Wasserverdünnbarkeit von 1 : 2,0 erreicht ist. Es wird auf 20°C abgekühlt und 110 g eines Mischkondensationsprodukts aus ε-Caprolactam, Formamid und Formaldehyd zugesetzt. Man erhält 1800 g Melaminharz, das, mit 0,9% Morpholin-p-toluolsulfonat als Härter versetzt, ca. 2 Wochen haltbar ist.

2.1. In der mit Härter versetzten Tränkflotte wurde sofort nach der Herstellung ein 80 g/m² schweres weißes Dekorpapier auf ein Endgewicht von ca. 200 g/m² imprägniert und auf einen Restfeuchtegehalt von 5,5 bis 7 Gew.-% (5 Min./160°C) getrocknet.

2.1.1. Ein Teil der Papiere wurde anschließend auf einer Kurztaktpresse mit einem Druck von 18 bis 22 bar bei einer Temperatur von 160°C auf Holzspanplatten aufgepreßt. Die Standzeit der Presse betrug 60 Sekunden. Die Oberflächen der Beschichtungen zeigten gleichmäßigen Glanz und nach einer Temperung von 20 Stunden bei 140°C keine Risse. Die Aushärtung der Oberfläche war ebenfalls gut; der Kitontest ergab die Note 2 – 3.

2.1.2. Ein Teil der imprägnierten Papiere wurde auf einer Kurztaktpresse mit einem Druck von 18 bis 22 bar bei einer Temperatur von 180°C und einer Standzeit von 3 Minuten auf Holzspanplatten aufgepreßt (Überhärtungspressung). Die Oberflächen der Beschichtungen zeigten bei gleichmäßigen Glanz und sehr hoher Aushärtung keine Risse. Der Kitontest ergab eine Note von 1 – 2.

2.2. Das als Modifizierungsmittel in obigem Beispiel eingesetzte Mischkondensationsprodukt wird wie folgt hergestellt:
695 g Formamid, 195 g ε-Caprolactam, 285 g Granuform (90%iger Paraformaldehyd) und 1 g KOH werden 6 Stunden lang bei 80°C gerührt, dann werden 4 g $KHSO_4$ zugegeben und bei 100°C und einem Druck von 266,6 mbar ca. 90 ml Reaktionswasser abdestilliert. Man erhält 950 g (80%) einer klaren viskosen Flüssigkeit, die in jedem Verhältnis mit Wasser mischbar ist.

## Beispiel 3

36,0 kg wäßrige, 39gew.%ige Formaldehydlösung, 3,4 kg »Mischamid« (vergl. Beispiel 2.2), 1,0 kg Methanol, 2,2 kg Natriumsalz der Amidosulfonsäure, und 15,0 kg Wasser werden auf einen pH-Wert von 10,1 mit Dimethylaminoäthanol gestellt und 32 kg Melamin zugegeben. Dieses Gemisch wird bei 90°C auf eine Wasserverdünnbarkeit von 1 : 2,0 kondensiert, auf 50°C abgekühlt und 5 kg Wasser zugefügt. Der Harzlösung werden 430 g Morpholin-p-toluolsulfonat als Härtungsbeschleuniger zugesetzt.

Das erhaltene Harz zeigt erst nach 2 Wochen eine Trübung und geliert nach 3 Wochen.

In Analogie zu den Beispielen 1.1. und 1.1.1. weiterverwendet wird eine beschichtete Holzspanplatte erhalten, deren Oberfläche einen gleichmäßigen Glanz zeigt und im Kitontest die Aushärtungs-Note 2 hat.

Ersetzt man die oben eingesetzten 3,4 kg »Mischamid« durch die gleiche Menge Caprolactam, so erhält man folgende Haltbarkeiten und Aushärtungs-Noten (Kitontest). Trübung nach 3 Wochen; geliert nach 5 Wochen; Kitontest-Note 2 – 3.

## Beispiel 4

3650 g 39%iger wäßriger Formaldehyd, 270 g Methanol, 1580 g Wasser, 25 g Dimethylaminoäthanol und 3250 g Melamin werden bei 90°C bis zu einer Wasserverdünnbarkeit von 1 : 1,5 kondensiert. Dieses Harz kann beliebig nachmodifiziert werden; so erhält man ein sehr gutes Kurztaktharz, wenn man auf 1 kg dieses Harzes in vorliegender Form beispielsweise 55 g des auch in Beispiel 2 als Modifizierungsmittel eingesetzten ε-Caprolactam-Mischkondensats zufügt. Nach Zusatz von 0,8 Gew.-%, bezogen auf Festkörper des Harzes, Morpholin-p-toluol-sulfonat als Härter erhält man ein Harz, das ca. 3 Wochen unverändert haltbar ist.

4.1. In der mit Härter versetzten Tränkflotte wurde ein 80 g/m² schweres weißes Dekorpapier auf ein Endgewicht von ca. 200 g/m² imprägniert und auf einen Restfeuchtegehalt von 5,5 bis 7 Gew.-% (5 Min./160°C) getrocknet.

4.1.1. Ein Teil der Papiere wurde anschließend auf einer Kurztaktpresse mit einem Druck von 18 bis 22 bar bei einer Temperatur von 160°C auf Holzspanplatten aufgepreßt. Die Standzeit der Presse betrug 60 Sekunden. Die Oberflächen der Beschichtungen zeigten gleichmäßigen Glanz und nach einer Temperung von 20 Stunden bei 140°C keine Risse. Die Aushärtung der Oberfläche war ebenfalls gut; der Kitontest ergab die Note 2.

Beispiel 5

19,6 kg 39%iger wäßriger Formaldehyd, 0,17 kg Dimethylaminoäthanol, 1,5 kg Diglykol, 0,5 kg Methanol, 2 kg Zucker, 17,7 kg Melamin und 8 kg Wasser werden bei 90°C bis zu einer Wasserverdünnbarkeit von 1 : 2,0 kondensiert. Das Harz wurde mit 5,8 Gew.-%, bezogen auf Festkörper des auch in den Beispielen 2 und 8 als Modifizierungsmittel eingesetzten ε-Caprolactam-Mischkondensats gemischt. Nach Zusatz von 0,8 Gew.-%, bezogen auf Festkörper des Harzes, Morpholin-p-toluol-sulfonat als Härter, erhält man ein Harz, das 3 bis 6 Wochen unverändert haltbar ist.

5.1. In der mit Härter versetzten Tränkflotte wurde ein 80 g/m² schweres weißes Dekorpapier auf ein Endgewicht von ca. 200 g/m² imprägniert und auf einen Restfeuchtegehalt von 5,5 bis 7 Gew.-% (5 Min./160° C) getrocknet.

5.1.1. Ein Teil der Papiere wurde anschließend auf einer Kurztaktpresse mit einem Druck von 18 bis 22 bar bei einer Temperatur von 160° C auf Holzspanplatten aufgepreßt. Die Standzeit der Presse betrug 60 Sekunden. Die Oberflächen der Beschichtungen zeigten gleichmäßigen Glanz und nach einer Temperung von 20 Stunden bei 140° C keine Risse. Die Aushärtung der Oberfläche war ebenfalls gut; der Kitontest ergab die Note 2.

**Patentansprüche**

1. Melamin-Formaldehyd-Harz bestehend aus einem gegebenenfalls teilverätherten Melamin-Formaldehyd-Vorkondensat und gegebenenfalls eine oder verschiedenen Modifizierungsmitteln, dadurch gekennzeichnet, daß das Molverhältnis Melamin : Formaldehyd 1 : 1,4 bis 1 : 2,6 beträgt, daß es 0,1 bis 1,0 Gew.-%, bezogen auf Festkörper, eines Amins der Formel I

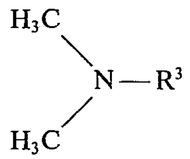
(I)

worin $R^3$ 2-Hydroxyäthyl oder 2,3-Dihydroxypropyl bedeutet, wobei das Amin ganz oder teilweise in Form seiner Reaktionsprodukte mit dem Melamin-Formaldehyd-Kondensationsprodukt vorliegen kann, und 0,5 bis 40 Gew.-%, bezogen auf Festkörper, Methylenbisformamid der Formel II

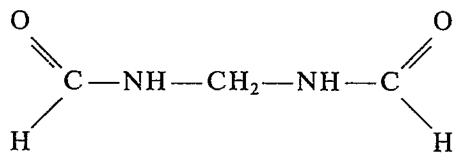
(II)

und/oder Bis-(N-acylaminomethyl)-äther der Formel III

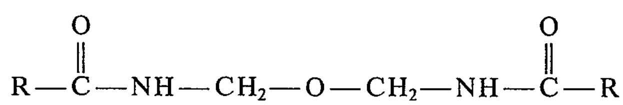
(III)

worin R Wasserstoff oder Methyl bedeutet und/oder ein Kondensationsprodukt aus ε-Caprolactam, Formaldehyd und Formamid im Molverhältnis 1 : a : b, wobei a eine Zahl von 1 bis 20, vorzugsweise 1 bis 2, und b eine Zahl von 1 bis 19, vorzugsweise 1, bedeutet und a und b so gewählt werden, daß der Quotient $\frac{a}{b+1} = 0{,}5$ bis 1 ist, enthält.

2. Melamin-Formaldehydharz nach Anspruch 1, dadurch gekennzeichnet, daß es ein Amin der Formel 1 enthält, worin $R^3$ 2-Hydroxyäthyl bedeutet.

3. Melamin-Formaldehydharz nach den Ansprüchen 1 und 2, dadurch gekennzeichnet, daß es 0,2 bis 1,0 Gew.-% des Amins der Formel I enthält.

4. Melamin-Formaldehydharz nach den Ansprüchen 1 bis 3, dadurch gekennzeichnet, daß das Molverhältnis Melamin : Formaldehyd 1 : 1,5 bis 1 : 2,3 beträgt.

5. Melamin-Formaldehydharz nach den Ansprüchen 1 bis 4, dadurch gekennzeichnet, daß es 0,25 bis 0,5 Gew.-% des Amins der Formel I enthält.

6. Melamin-Formaldehydharz gemäß den Ansprüchen 1 bis 5, dadurch gekennzeichnet, daß es 2,5 bis 25 Gew.-% Methylenbisformamid der Formel II und/oder Bis-(N-acylaminomethyl)-äther der

Formel III und/oder ein Kondensationsprodukt aus ε-Caprolactam, Formaldehyd und Formamid enthält.

7. Melamin-Formaldehydharz nach den Ansprüchen 1 bis 6, dadurch gekennzeichnet, daß es zusätzlich eine zur Aushärtung bei Temperaturen oberhalb 100°C ausreichende Menge eines Härtungsbeschleunigers enthält.

8. Verfahren zur Herstellung von Melamin-Formaldehydharzen der Ansprüche 1 bis 7 durch Kondensation von Melamin, Formaldehyd und gegebenenfalls an sich bekannten Modifizierungsmitteln in Gegenwart üblicher anorganischer Basen im pH-Bereich von 8,2 bis 10,4, dadurch gekennzeichnet, daß man Melamin und Formaldehyd im Molverhältnis von 1 : 1,4 bis 1 : 2,6 bis zu einer Wasserverdünnbarkeit von 1 : 3 bis 1 : 0,8 kondensiert, vor, während oder nach der Kondensation 0,1 bis 1,0 Gew.-%, bezogen auf Festkörper, eines Amins der Formel I

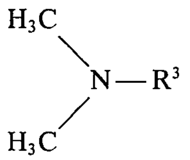 (I)

worin $R^3$ 2-Hydroxyäthyl oder 2,3-Dihydroxypropyl bedeutet, wobei dieses Amin ganz oder teilweise in Form seiner Reaktionsprodukte mit dem Melamin-Formaldehyd-Kondensationsprodukt vorliegen kann, zusetzt, wobei bei Zusatz des Amins vor der Kondensation der Zusatz der üblichen anorganischen Base unterbleiben kann, und vor, während oder nach der Kondensation 0,5 bis 40 Gew.-%, bezogen auf Festkörper, Methylenbisformamid der Formel II

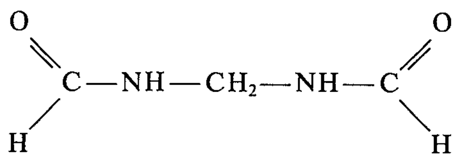 (II)

und/oder Bis-(N-acylaminomethyl)-äther der Formel III

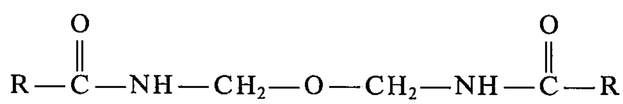 (III)

worin R Wasserstoff oder Methyl bedeutet und/oder ein Kondensationsprodukt aus ε-Caprolactam, Formaldehyd und Formamid im Molverhältnis 1 : a : b, wobei a eine Zahl von 1 bis 20, vorzugsweise 1 bis 2, und b eine Zahl von 1 bis 19, vorzugsweise 1, bedeutet und a und b so gewählt werden, daß der Quotient $\frac{a}{b+1} = 0{,}5$ bis 1 ist, zusetzt.

9. Verfahren gemäß Anspruch 8, dadurch gekennzeichnet, daß man das Amin der Formel I vor der Kondensation zusetzt und den Zusatz der üblichen anorganischen Base unterläßt.

10. Verfahren nach den Ansprüchen 7 bis 9, dadurch gekennzeichnet, daß man ein Amin der Formel I zusetzt, worin $R^3$ 2-Hydroxyäthyl bedeutet.

11. Verwendung der Melamin-Formaldehydharze nach den Ansprüchen 1 bis 7 zur Herstellung von beschichteten Holzwerkstoffen und Schichtpreßstoffen.

## Claims

1. Melamine-formaldehyde resin consisting of an optionally partially etherified melamine-formaldehyde precondensation product and optionally one or diverse modifying agents, characterised in that the molar ration of melamine : formaldehyde is 1 : 1.4 to 1 : 2.6, that it contains 0.1 to 1.0% by weight, based on solids, of an amine of the formula I

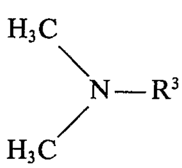 (I)

wherein $R^3$ denotes 2-hydroxyethyl or 2,3-dihydroxypropyl, it being possible for the amine to be present entirely or partially in the form of its reaction products with the melamine-formaldehyde condensation product, and contains 0.5 to 40% by weight, based on solids, of methylene-bis-formamide of the formula II

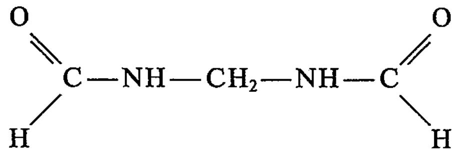

(II)

and/or bis-(N-acylaminomethyl) ether of the formula III

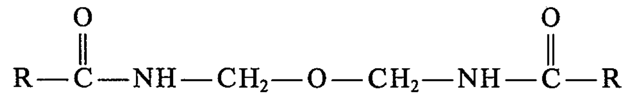

(III)

wherein R denotes hydrogen or methyl and/or a condensation product from ε-caprolactam, formaldehyde and formamide in a molar ratio of 1 : a : b, in which a denotes a number from 1 to 20, preferably 1 to 2, and b denotes a number from 1 to 19. preferably 1, and a and b are chosen such that the quotient $\frac{a}{b+1}$ is 0.5 to 1.

2. Melamine-formaldehyde resin according to Claim 1, characterised in that it contains an amine of the formula I wherein $R^3$ denotes 2-hydroxyethyl.

3. Melamine-formaldehyde resin according to Claims 1 and 2, characterised in that it contains 0.2 to 1.0% by weight of the amine of the formula I.

4. Melamine-formaldehyde resin according to Claims 1 to 3, characterised in that the molar ratio of melamine : formaldehyde is 1 : 1.5 to 1 : 2.3.

5. Melamine-formaldehyde resin according to Claims 1 to 4, characterised in that it contains 0.25 to 0.5% by weight of the amine of the formula I.

6. Melamine-formaldehyde resin according to Claims 1 to 5, characterised in that it contains 2.5 to 25% by weight of methylene-bis-formamide of formula II and/or bis-(N-acylaminomethyl)-ether of formula III and/or a condensation product from ε-caprolactam, formaldehyde and formamide.

7. Melamine-formaldehyde resin according to Claims 1 to 6, characterised in that it additionally contains a curing accelerator in an amount which suffices for curing at temperatures above 100° C.

8. Process for the manufacture of melamine-formaldehyde resins according to Claims 1 to 7 by a condensation reaction of melamine, formaldehyde and, optionally, modifying agents which are in themselves known, in the presence of customary inorganic bases in the pH range of 8.2 to 10.4, characterised in that melamine and formaldehyde in a molar ratio of 1 : 1.4 to 1 : 2.6 are subjected to a condensation reaction until a dilutability with water of 1 : 3 to 1 : 0.8 is obtained, 0.1 to 1.0% by weight, based on solids, of an amine of the formula I

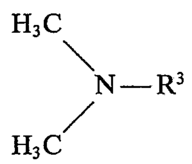

(I)

wherein $R^3$ denotes 2-hydroxyethyl or 2,3-dihydroxypropyl, is added before, during or after the condensation reaction, it being possible for the said amine to be present entirely or partially in the form of its reaction products with the melamine-formaldehyde condensation product and for the addition of the customary inorganic base to be dispensed with if the amine is added before the condensation reaction, and contains before, during or after the condensation reaction 0.5 to 40% by weight, based on solids, of methylene-bis-formamide of the formula II

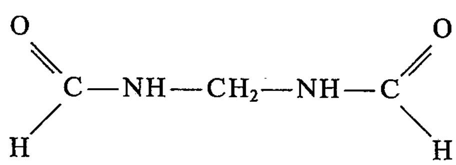

(II)

and/or bis-(N-acylaminomethyl) ethers of the formula III

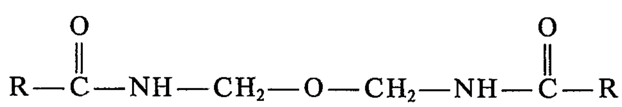

(III)

wherein R denotes hydrogen or methyl and/or a condensation product of ε-caprolactam, formaldehyde and formamide in a molar ratio of 1 : a : b, in which a denotes a number from 1 to 20, preferably 1 to 2, and b denotes a number from 1 to 19, preferably 1, and a and b are chosen such that the quotient $\frac{a}{b+1}$ is 0.5 to 1.

9. Process according to Claim 8, characterised in that the amine of the formula I is added before the condensation reaction and the addition of the customary inorganic base is dispensed with.

10. Process according to Claims 7 to 9, characterised in that an amine of the formula I wherein $R^3$ is 2-hydroxyethyl is added.

11. Use of the melamine-formaldehyde resins according to Claims 1 to 7 for the production of coated wood-based materials and moulded laminates.

**Revendications**

1. Résine mélamine-formaldéhyde constituée par un précondensat mélamine-formaldéhyde éventuellement éthérifié partiellement et le cas échéant un agent modifiant ou divers agents modifiants, caractérisée en ce que le rapport molaire mélamine : formaldéhyde est compris entre 1 : 1,4 et 1 : 2,6, et en ce qu'elle contient 0,1 à 1% en poids, par rapport à la matière solide, d'une amine de formule I

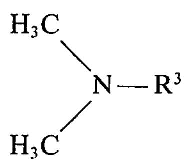

(I)

(dans laquelle le symbole $R^3$ désigne un radical 2-hydroxy-éthyle ou 2,3-dihydroxypropyle, amine qui peut être en totalité ou en partie sous la forme de ses produits de réaction avec le produit de condensation mélamine-formaldéhyde), et 0,5 à 40% en poids, toujours par rapport à la matière solide de méthylène-bis-formamide de formule II

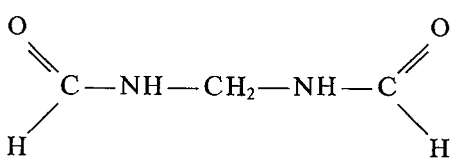

(II)

et/ou d'un bis-(N-acylaminométhyl)-éther de formule III

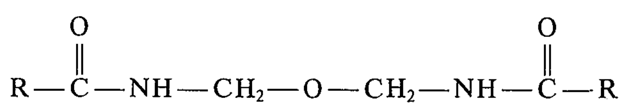

(III)

(dans laquelle R désigne l'hydrogène ou un méthyle) et/ou d'un produit de condensation d'ε-caprolactame, de formaldéhyde et de formamide dans les proportions molaires 1 : a : b, a étant un nombre de 1 à 20, de préférence de 1 à 2, et b un nombre de 1 à 19, de préférence le nombre 1, et a et b étant choisis de manière que le quotient $\frac{a}{b+1}$ soit compris entre 0,5 et 1.

2. Résine mélamine-formaldéhyde selon la revendication 1, caractérisée en ce qu'elle contient une amine de formule I dans laquelle $R^3$ est un groupe 2-hydroxyéthyle.

3. Résine mélamine-formaldéhyde selon la revendication 1 ou 2 caractérisée en ce qu'elle contient 0,2 à 1% en poids de l'amine de formule I.

4. Résine mélamine-formaldéhyde selon l'une quelconque des revendications 1 à 3, caractérisée en ce que le rapport molaire mélamine : formaldéhyde est compris entre 1 : 1,5 et 1 : 2,3.

5. Résine mélamine-formaldéhyde selon l'une quelconque des revendications 1 à 4, caractérisée en ce qu'elle contient 0,25 à 0,5% en poids de l'amine de formule I.

6. Résine mélamine-formaldéhyde selon l'une quelconque des revendications 1 à 5, caractérisée en ce qu'elle contient 2,5 à 25% en poids du méthylène-bis-formamide de formule II et/ou de l'éther bis-(N-acylaminométhylique) de formule III et/ou du produit de condensation d'ε-caprolactame, de formaldéhyde et de formamide.

7. Résine mélamine-formaldéhyde selon l'une quelconque des revendications 1 à 6, caractérisée en ce qu'elle contient en outre une proportion d'un accélérateur de durcissement suffisante pour obtenir

un durcissement total à des températures supérieures à 100° C.

8. Procédé de préparation des résines mélamine-formaldéhydes selon l'une quelconque des revendications précédentes par condensation de la mélamine avec le formaldéhyde et le cas échéant des agents modifiants connus en présence de bases minérales courantes à un pH de 8,2 à 10,4, procédé caractérisé en ce que l'on condense la mélamine avec le formaldéhyde dans un rapport molaire compris entre 1 : 1,4 et 1 : 2,6 jusqu'à une diluabilité à l'eau du produit formé de 1 : 3 à 1 : 0,8, en ajoutant, avant, pendant ou après la condensation, 0,1 à 1% en poids, par rapport à la matière solide, d'une amine de formule I

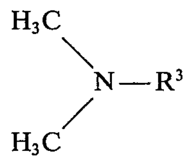

(I)

(dans laquelle $R^3$ représente un radical 2-hydroxyéthyle ou 2,3-dihydroxypropyle, amine qui peut être en totalité ou en partie sous la forme de ses produits de réaction avec le condensat mélamine-formaldéhyde), et si l'on ajoute l'amine avant la condensation, on peut supprimer l'addition des bases minérales courantes, et, également avant, pendant ou après la condensation, 0,5 à 40% en poids, par rapport à la matière solide, de méthylène-bis-formamide de formule II

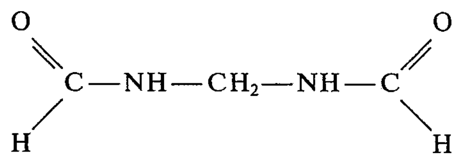

(II)

et/ou d'un bis-(N-acylaminométhyl)-éther de formule III

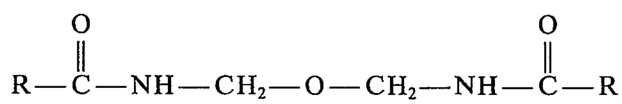

(III)

(dans laquelle R désigne l'hydrogène ou un méthyle) et/ou d'un produit de condensation d'$\varepsilon$-caprolactame, de formaldéhyde et de formamide dans les proportions molaires 1 : a : b, a étant un nombre de 1 à 20, de préférence de 1 à 2, et b un nombre de 1 à 19, de préférence le nombre 1, et a et b étant choisis de manière que le quotient $\frac{a}{b+1}$ soit compris entre 0,5 et 1.

9. Procédé selon la revendication 8, caractérisé en ce que l'amine de formule I est ajoutée avant la condensation et l'addition de la base minérale usuelle est supprimée.

10. Procédé selon l'une quelconques des revendication 7 à 9 ou 9 caractérisé en ce que l'on ajoute une amine de formule I dans laquelle $R^3$ est un radical 2-hydroxyéthyle.

11. Utilisation des résines mélamineformaldéhyde selon l'une quelconque des revendications 1 à 7 pour la fabrication de matériaux et produits manufacturés en bois revêtus et de stratifiés.